# EUROPEAN PATENT APPLICATION

(11) **EP 2 521 416 A1**
(43) Date of publication of application: **07.11.2012**
(21) Application number: 10847260.6
(22) Date of filing: 23.08.2010
(51) Int. Cl.: H04W 84/00

(54) **METHOD AND SYSTEM FOR IDENTIFYING TRANSMISSION BEARER CAPACITY OF IUR INTERFACE**

(30) Priority: 10.03.2010 CN 201010121307
(71) Applicant: ZTE Corporation, Shenzhen, Guangdong 518057 (CN)
(72) Inventor: CHENG, Xiang, Shenzhen Guangdong 518057 (CN); LIU, Lin, Shenzhen Guangdong 518057 (CN); KE, Yazhu, Shenzhen Guangdong 518057 (CN)
(74) Representative: Prinz & Partner
(86) International application number: PCT/CN2010/076257
(87) International publication number: WO 2011/110002

(57) **Abstract**

The disclosure provides a method for identifying the transport bearer capacity of the IUR interface, in which a serving radio network controller (RNC) identifies a cell as supporting "separated IUR transport bearer" and "shared IUR transport bearer" when determining the cell supports "uplink multi-carrier", and identifies the cell as supporting the "separated IUR transport bearer" and not supporting the "shared IUR transport bearer" when determining the cell does not support the "uplink multi-carrier". The disclosure also provides a system for identifying the transport bearer capacity of the IUR interface. The cell which does not support the uplink multi-carrier and the cell which supports the uplink multi-carrier may join in a same macro diversity of the soft handoff, thereby improving the system performance and increasing the macro diversity combining gain of the soft handoff

## Description

### TECHNICAL FIELD

The disclosure relates to the wireless communication technology, and in particular, to a method and a system for identifying a transport bearer capacity of an IUR interface.

### BACKGROUND

In the High Speed Uplink Packet Access (HSUPA) technology, the performance of the uplink packet data is improved by means of rapid scheduling, rapid retransmission and combination in the physic layer and the like. In the HSUPA technology, a new transmission channel, namely, enhanced Dedicated Channel (E-DCH) is introduced to carry user data in the single uplink direction. The Media Access Control-dedicated (MAC-d) Protocol Data Unit (PDU) is mapped to a data stream in the E-DCH, which is referred to as a MAC-d flow. A terminal is generally provided with one or more MAC-d flows.

In a radio communication system, an interconnection interface between radio network controllers (RNC), namely, an IUR interface is used by an RNC to perform signaling and data interaction with other RNCs and is a link for the interconnection between the wireless network sub-systems. When a terminal has established a connection to the radio access network, and soft handoffs occur at the IUR interface, the resources of more than one RNC will be used. Different RNCs play different roles, such as a serving RNC and a drifting RNC. The serving RNC maintains the interfacing between the terminal and the core network, and is responsible for data transfer between the core network and the terminal, forwarding and reception of the interface signaling of the core network, radio resource control, layer-2 process for the data at an air interface and performing of the basic radio resource management operation, such as a handoff decision, outer loop power control, conversion of radio access bearer parameters to air interface transmission channel parameters and the like. The drifting RNC refers to RNCs except for the serving RNC, and it generally controls cells used by the terminal. The drifting RNC can perform macro diversity combinations when necessary. Generally, the drifting RNC does not perform layer-2 process for the terminal plane data, but only delivers the air interface data to the serving RNC transparently via a route through the IUR interface, unless the terminal uses the public transmission channel. A terminal may be associated with more than one drifting RNCs.

The IUR interface provides a way of transmitting the uplink E-DCH between the drifting RNC and the serving RNC. An IUR-interface framing-protocol-layer data stream corresponds to data carried in a MAC-d flow of a terminal. Consequentially, a terminal is provided with one or more IUR-interface framing-protocol-layer data streams.

In the single-carrier HSUPA technology, an IUR-interface framing-protocol-layer data stream is carried by one IUR interface transport bearer; thus it is unnecessary to contain the carrier identifier in the IUR-interface framing-protocol-layer data stream. In the multi-carrier HSUPA technology, an IUR-interface framing-protocol-layer data stream can be carried either by one IUR interface transport bearer or by multiple IUR interface transport bearers (the number is same as the number of the carriers in the multiple carriers). When the IUR-interface framing-protocol-layer data stream is carried by one IUR interface transport bearer, IUR-interface framing-protocol-layer data stream must contain the carrier identifier to clarify the carrier with which the carried data from the air interface are associated. Such a processing way is referred to as E-DCH UL Flow Multiplexing. In the context, the processing way is referred to as "shared IUR transport bearer" according to the logic meaning. When an IUR-interface framing-protocol-layer data stream is carried by multiple IUR interface transport bearers, that is, according to the carriers with which the data from the air interface carried in IUR-interface framing-protocol-layer data streams are associated, when data associated with each of the carriers are carried on an IUR interface transport bearer, and the data associated with multiple carriers are carried on multiple IUR interface transport bearers (the number of the IUR interface transport bearers is same as that of the carriers in the multiple carriers), it is unnecessary to contain the carrier identifier in the IUR-interface framing-protocol-layer data streams. Such a processing way is referred to as "separated IUR transport bearer".

An adjacent cell of a cell may be associated with a drifting RNC; and the drifting RNC needs to inform the serving RNC of the support capability of the adjacent cell for the individual features, so that the serving RNC can make a decision on the relevant features, for example, whether to use the features and how to use the features. Generally speaking, the support capability of the cell associated with the drifting RNC for the individual features includes:
1) Multi Cell E-DCH capability, which is referred to as "uplink multi-carrier" capability for short in the context according to the logic meaning. The "uplink multi-carrier" capability, to which "support" or "not support" may be assigned, indicates whether the cell supports the "uplink multi-carrier".
2) E-DCH UL Flow Multiplexing capability, which is referred to as "shared IUR transport bearer" capability for short in the context according to the logic meaning. The "shared IUR transport bearer" capability, to which "support" or "not support" may be assigned, indicates whether the cell supports sharing of the IUR transport bearer. A cell supporting the sharing of the IUR transport bearer will support carrying of the IUR-interface framing-protocol-layer data stream by one IUR interface transport bearer, and the carrier identifier must be contained in the IUR-interface framing-protocol-layer data stream; and if the cell does not support the sharing of the IUR transport bearer, the cell will not support carrying of the IUR-interface framing-protocol-layer data stream by one IUR interface transport bearer, or support the operation of containing the carrier identifier in the IUR-interface framing-protocol-layer data stream.
3) Separated IUR transport bearer capability, to which "support" or "not support" may be assigned. When the cell supports the "separated IUR transport bearer" capability, the cell supports carrying of the IUR-interface framing-protocol-layer data stream by multiple IUR interface transport bearers; and if the cell does not support the separated IUR transport bearer capability, the cell does not support carrying of the IUR-interface framing-protocol-layer data stream by multiple IUR interface transport bearers.

In the current multi-carrier HSUPA technology, for each carrier, there is an independent macro diversity for performing soft handoffs independently; each cell that participates in the macro diversity of the soft handoff might be a cell supporting the uplink multi-carrier operation or a cell not supporting the uplink multi-carrier operation, such as a legacy single-carrier cell. For each of the carriers associated with a specified terminal , the individual cells that participate in the macro diversity of the soft handoff shall have the same IUR transport bearer support capability; and only if the individual cells that participate in the macro diversity of the soft handoff support the "separated IUR transport bearer" or "shared IUR transport bearer", normal data reordering and combination can be performed during the soft handoff; otherwise, the serving RNC cannot involve the cell with different IUR transport bearer support capabilities in the macro diversity of the soft handoff. For example, for a cell using the multi-carrier HSUPA technology, which is associated with a drifting RNC, supports the "uplink multi-carrier" and supports the "shared IUR transport bearer" but does not support the "separated IUR transport bearer", if the serving RNC, in order to perform soft handoff on the carrier of the cell, has to involve a legacy single-carrier cell in the macro diversity of the soft handoff, as the legacy single-carrier cell does not support the "shared IUR transport bearer", the serving RNC cannot involve the legacy single-carrier cell into the macro diversity of the soft handoff, thereby affecting the system performance and reducing the macro diversity combining gain of the soft handoff.

### SUMMARY

In view of the above, the main purpose of the disclosure is to provide a method and a system for identifying the transport bearer capacity of an IUR interface, which can improve the system performance and increase the macro diversity combining gain of the soft handoff.

In order to achieve the purpose, the technical solutions of the disclosure are implemented in the following ways.

A method for identifying a transport bearer capacity of an IUR interface includes identifying, by a serving radio network controller (RNC), a cell as supporting "separated IUR transport bearer" and "sheared IUR transport bearer", when determining the cell supports "uplink multi-carrier"; and identifying, by the serving RNC, the cell as supporting the "separated IUR transport bearer" and not supporting the "shared IUR transport bearer", when determining the cell does not support the "uplink multi-carrier".

In the technical solution, before determining whether the cell supports the "uplink multi-carrier", the serving RNC receives the support capability information about the uplink multi-carrier capability of the cell from a drifting RNC and analyzes the information.

The cell is in the drifting RNC.

In the technical solution, the drifting RNC sends the support capability information of the uplink multi-carrier capability of the cell to the serving RNC as the support capability information of an adjacent cell.

A system for identifying the transport bearer capacity of the IUR interface includes a determination unit and an identification unit, both of which are located in the serving RNC.

The determination unit is configured to determine whether a cell supports "uplink multi-carrier" and to send the determination to the identification unit; and the identification unit is configured to identify the cell as supporting both "separated IUR transport bearer" and "shared IUR transport bearer", when the cell supports the "uplink multi-carrier", and to identify the cell as supporting the "separated IUR transport bearer" and not supporting the "shared IUR transport bearer", when the cell does not support the "uplink multi-carrier".

In the technical solution, the system may further include a drifting RNC as well as a reception and analysis unit located in the serving RNC; the drifting RNC is configured to send support capability information about uplink multi-carrier capability of the cell to the serving RNC; the reception and analysis unit is configured to receive the support capability information about the uplink multi-carrier capability of the cell from the drifting RNC, to analyze the information, and to send the analysis to the determination unit; and the determination unit is further configured to determine whether the cell supports the "uplink multi-carrier" according to the analysis from the reception and analysis unit.

The cell is in the drifting RNC.

In the technical solution, the drifting RNC may send the support capability information about the uplink multi-carrier capability of the cell to the serving RNC by way of sending the support capability information of the uplink multi-carrier capability of the cell to the serving RNC as the support capability information of an adjacent cell.

In the method and system for identifying the transport bearer capacity of the IUR interface, for the cell supporting the "uplink multi-carrier" associated with the drifting RNC, the serving RNC identifies the cell as a cell supporting "separated IUR transport bearer" and "shared IUR transport bearer"; and for the cell not supporting the "uplink multi-carrier" associated with the drifting RNC, the serving RNC identifies the cell as a cell supporting "separated IUR transport bearer" and not supporting "shared IUR transport bearer". In the disclosure, as the cell that does not support the "uplink multi-carrier" is identified as a cell supporting the "separated IUR transport bearer" and not supporting the "shared IUR transport bearer", the cell which does not support the uplink multi-carrier and the cell which supports the uplink multi-carrier may join in a same macro diversity of the soft handoff, thereby improving the system performance and increasing the macro diversity combining gain of the soft handoff.

### BRIEF DESCRIPTION OF THE DRAWINGS

Fig. 1 is a flowchart of a method for identifying the transport bearer capacity of an IUR interface according to the disclosure;
Fig. 2 is a flowchart of a method for identifying the transport bearer capacity of the IUR interface according to embodiment 1 of the disclosure; and
Fig. 3 is a flowchart of a method for identifying the transport bearer capacity of the IUR interface according to embodiment 2 of the disclosure.

### DETAILED DESCRIPTION

The basic principle of the disclosure lies in that, for the cell that supports "uplink multi-carrier" associated with the drifting RNC, the serving RNC identifies the cell as a cell supporting "separated IUR transport bearer" and "shared IUR transport bearer"; and for the cell that does not support "uplink multiple carriers" associated with the drifting RNC, the serving RNC identifies the cell as a cell supporting "separated IUR transport bearer" and not supporting "shared IUR transport bearer".

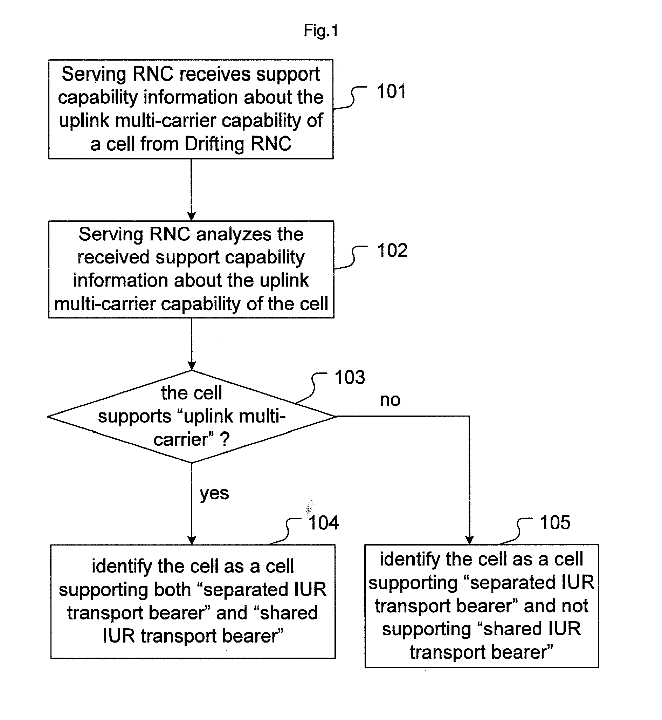

Fig. 1 is a flowchart of a method for identifying the transport bearer capacity of an IUR interface according to the disclosure. As shown in Fig. 1, the method for identifying the transport bearer capacity of the IUR interface according to the disclosure includes the following steps:

Step 101, the serving RNC receives the support capability information about the "uplink multi-carrier capability" of the cell from the drifting RNC.

Generally speaking, the cell is in the drifting RNC; and the drifting RNC sends the support capability information about the uplink multi-carrier capability of the cell to the serving RNC in the context that the cell is as an adjacent cell of another cell, and the drifting RNC takes the support capability information about the uplink multi-carrier capability of the cell as the support capability information of the adjacent cell and sends the information to the serving RNC.

Step 102, the serving RNC analyzes the received support capability information about the uplink multi-carrier capability of the cell.

Step 103, the serving RNC determines whether the cell supports the "uplink multi-carrier", if so, the Step 104 is performed, otherwise, the process turns to the Step 105.

Step 104, the serving RNC identifies the cell as a cell supporting "separated IUR transport bearer" and "shared IUR transport bearer".

Here, the support capability information about the uplink multi-carrier capability reads "support".

Step 105, the serving RNC identifies the cell as a cell supporting "separated IUR transport bearer" and not supporting "shared IUR transport bearer".

Here, the support capability information about the uplink multi-carrier capability reads "not support".

In the disclosure, for the cell supporting the "uplink multi-carrier" in the drifting RNC, the serving RNC identifies the cell as a cell supporting "separated IUR transport bearer" and "shared IUR transport bearer". For the cell not supporting the "uplink multi-carrier" in the drifting RNC, the serving RNC identifies the cell as a cell supporting "separated IUR transport bearer" and "shared IUR transport bearer". The reasons are set forth as follows.

For the legacy single-carrier cell, that is, in the single-carrier HSUPA technology, on the carrier, IUR-interface framing-protocol-layer data stream is carried by one IUR interface transport bearer; and it is unnecessary to contain the carrier identifier in the IUR-interface framing-protocol-layer data stream. As a result, the legacy single-carrier cell can be regarded as supporting the "separated IUR transport bearer". For the cell that supports the "uplink multi-carrier", both the "separated IUR transport bearer" and the "shared IUR transport bearer" are implemented by software, and are not inherently limited by any hardware or radio frequency resources. From the perspective of the software, both the "separated IUR transport bearer" and the "shared IUR transport bearer" can be implemented at a very low cost. From the perspective of the backward compatibility, the cell supporting the "uplink multi-carrier" can be exploited and used as a legacy single-carrier cell. Therefore, from the perspective of the serving RNC, the cell supporting the "uplink multi-carrier" can be understood as follows: in the early stage , i.e., in the single-carrier technique stage, the cell can be regarded as supporting the "separated IUR transport bearer"; and in the late stage, i.e., in the multi-carrier technique stage, the cell can be regarded as supporting a higher-level "shared IUR transport bearer". In other words, from the perspective of the serving RNC, supporting the "separated IUR transport bearer" may be regarded as a capability which must be supported in the single-carrier technique stage, while the "shared IUR transport bearer" may be regarded as a capability which had not been introduced until the multi-carrier technique stage. In this case, the serving RNC can perform the soft handoff and add a new cell without any barrier; for a macro diversity in which a legacy single-carrier cell is involved, the serving RNC can control use of the "separated IUR transport bearer"; and for a macro diversity in which all the cells support the uplink multi-carrier capability, the serving RNC determines whether the "separated IUR transport bearer" or the "shared IUR transport bearer" should be used according to a certain algorithm. As a result, the processing loopholes in the related art can be closed.

The disclosure also provides a system for identifying the transport bearer capacity of the IUR interface. The system comprises a determination unit and an identification unit, both of which are located in the serving RNC.

The determination unit is configured to determine whether the cell supports the "uplink multi-carrier" and to send the determined result to the identification unit; and
the identification unit is configured to identify the cell as a cell supporting both "separated IUR transport bearer" and "shared IUR transport bearer" when the cell supports "uplink multi-carrier", and to identify the cell as a cell supporting the "separated IUR transport bearer" and not supporting the "shared IUR transport bearer" when the cell does not support the "uplink multi-carrier".

The system further comprises a drifting RNC as well as a reception and analysis unit located in the serving RNC;
the drifting RNC is configured to send the support capability information about the uplink multi-carrier capability of the cell to the serving RNC;
the reception and analysis unit is configured to receive the support capability information about the uplink multi-carrier capability of the cell from the drifting RNC, to analyze the information, and then sending the analysis to the determination unit; and
the determination unit is further configured to determine whether the cell supports the "uplink multi-carrier" according to the analysis from the reception and analysis unit.

Here, the cell is in the drifting RNC.

The drifting RNC sends the support capability information about the uplink multi-carrier capability of the cell to the serving RNC by the following way: sending the support capability information of the uplink multi-carrier capability of the cell to the

SRNC as the support capability information of the adjacent cell.

In the disclosure, as the shared IUR transport bearer capability and the separated IUR transport bearer capability are removed from the support capabilities of each feature of the cells, the support capability of the cell is identified completely through analysis of the support capability information about the uplink multi-carrier capability. Therefore, the understanding ambiguity caused by the configuration can be avoided.

The implementation of the technical solution is further described below with reference to the specific embodiments in detail.

### Embodiment 1

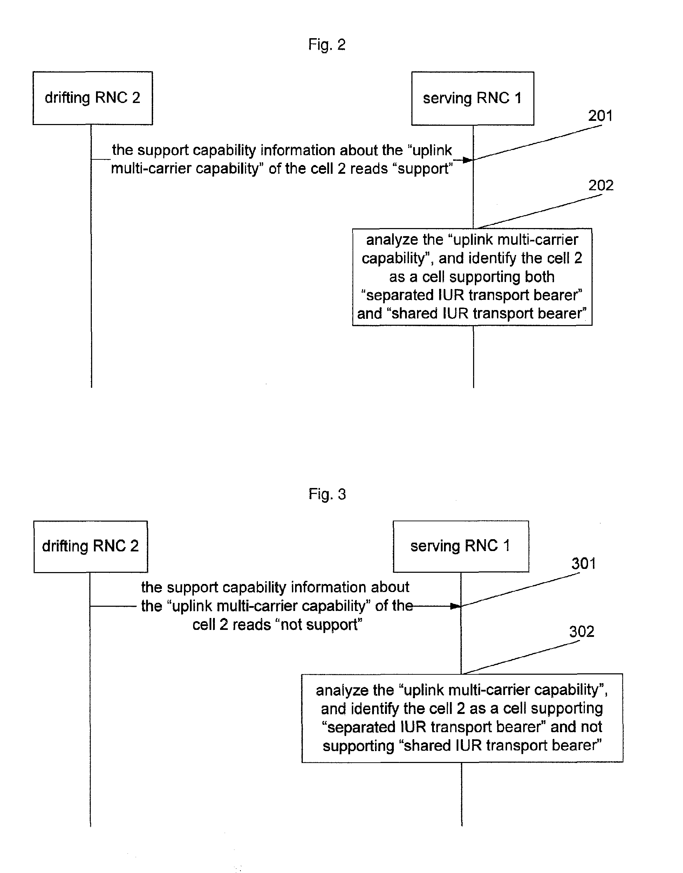

In the embodiment, the cell 1 is in the serving RNC 1; the cell 2 is in the drifting RNC; the cell 2 is an adjacent cell of the cell 1; and the support capability information about the uplink multi-carrier capability of the cell 2 reads "support". Fig. 2 is a flowchart of a method for identifying the transport bearer capacity of the IUR interface according to embodiment 1 of the disclosure. As shown in Fig. 2, the method comprises the following steps:

Step 201, the serving RNC 1 receives the support capability information about the uplink multi-carrier capability of the cell 2 reading "support" from the drifting RNC 2.

Here, the cell 2 is in the drifting RNC 2; the cell 2 is an adjacent cell of the cell 1; and the drifting RNC 2 notifies the serving RNC 1 of the support capability information of the adjacent cell, including the support capability information about the uplink multi-carrier capability reading "support".

Step 202, the serving RNC 1 analyzes the support capability information about the uplink multi-carrier capability as "support", and the serving RNC 1 identifies the cell 2 in the drifting RNC 2 as a cell supporting both the separated IUR transport bearer and the shared IUR transport bearer.

### Embodiment 2

In the embodiment, the cell 1 is in the serving RNC 1; the cell 2 is in the drifting RNC. The cell 2 is an adjacent cell of the cell 1. Here, the support capability information about the uplink multi-carrier capability reads "not support". Fig. 3 is a flowchart of a method for identifying the transport bearer capacity of the IUR interface according to embodiment 2 of the disclosure. As shown in Fig. 3, the method comprises the following steps:

Step 301, the serving RNC 1 receives the support capability information about the uplink multi-carrier capability of the cell 2 reading "not support" from the drifting RNC 2.

Here, the cell 2 is in the drifting RNC 2; the cell 2 is an adjacent cell of the cell 1. The drifting RNC 2 notifies the serving RNC 1 of the support capability information of the adjacent cell (the cell 2), including the support capability information about the uplink multi-carrier capability reading "not support".

Step 302, when the serving RNC 1 analyzes the support capability information about the uplink multi-carrier capability as "not support", the serving RNC 1 identifies the cell 2 in the drifting RNC 2 as a cell supporting "separated IUR transport bearer" and not supporting "shared IUR transport bearer".

The above is only the preferred embodiments of the disclosure and not intended to limit the scope of the disclosure.

## Claims

1. A method for identifying a transport bearer capacity of an IUR interface, comprising:
identifying, by a serving radio network controller (RNC), a cell as supporting "separated IUR transport bearer" and "shared IUR transport bearer", when determining the cell supports "uplink multi-carrier"; and
identifying, by the serving RNC, the cell as supporting the "separated IUR transport bearer" and not supporting the "shared IUR transport bearer", when determining the cell does not support the "uplink multi-carrier".

2. The method according to claim 1, further comprising:
before determining whether the cell supports the "uplink multi-carrier",
receiving and analyzing, by the serving RNC, support capability information about an uplink multi-carrier capability of the cell from a drifting RNC.

3. The method according to claim 2, wherein the cell is in the drifting RNC.

4. The method according to claim 2, wherein the drifting RNC sends the support capability information of the uplink multi-carrier capability of the cell to the serving RNC as the support capability information of an adjacent cell.

5. A system for identifying a transport bearer capacity of an IUR interface, comprising a determination unit and an identification unit, both of which are located in a serving radio network controller (RNC), wherein
the determination unit is configured to determine whether a cell supports "uplink multi-carrier" and to send the determination to the identification unit; and
the identification unit is configured to identify the cell as supporting both "separated IUR transport bearer" and "sheared IUR transport bearer", when the cell supports the "uplink multi-carrier", and to identify the cell as supporting the "separated IUR transport bearer" and not supporting the "shared IUR transport bearer", when the cell does not support the "uplink multi-carrier".

6. The system according to claim 5, further comprising a drifting RNC as well as a reception and analysis unit located in the serving RNC, wherein
the drifting RNC is configured to send support capability information about uplink multi-carrier capability of the cell to the serving RNC;
the reception and analysis unit is configured to receive the support capability information about the uplink multi-carrier capability of the cell from the drifting RNC, to analyze the information and to send the analysis to the determination unit; and
the determination unit is further configured to determine whether the cell supports the "uplink multi-carrier" according to the analysis from the reception and analysis unit.

7. The system according to claim 6, wherein the cell is in the drifting RNC.

8. The system according to claim 6, wherein the drifting RNC sends the support capability information about the uplink multi-carrier capability of the cell to the serving RNC by way of sending the support capability information of the uplink multi-carrier capability of the cell to the serving RNC as the support capability information of an adjacent cell.
